# EUROPEAN PATENT APPLICATION

(11) **EP 2 463 748 A1**
(43) Date of publication of application: **13.06.2012**
(21) Application number: 10194282.9
(22) Date of filing: 09.12.2010
(51) Int. Cl.: G06F 1/20, G06F 3/01, B06B 1/00, H04M 1/21

(54) **Method and apparatus for handheld device airflow**

(71) Applicant: Research In Motion Limited, Waterloo, ON N2L 3W8 (CA)
(72) Inventor: Rich, David Gerard, Waterloo Ontario N2L 5R9 (CA); Winger, Lyall Kenneth, Waterloo Ontario N2L 5R9 (CA)
(74) Representative: Moore, Barry

(57) **Abstract**

Various apparatus and methods are described for moving air in a portable electronic device for purposes such as cooling. In a typical embodiment, the apparatus comprises an airflow-generating device and a vibration component. The vibration component may be used to drive the airflow-generating device. Further, techniques are described in which the airflow-generating device may be driven without causing the portable electronic device to vibrate.

## Description

The present disclosure relates generally to portable electronic (typically handheld) devices. More particularly, the present disclosure relates to a method and apparatus for portable electronic device airflow, such as airflow for cooling.

Use of portable electronic devices in general—and use of mobile communication devices in particular—has continued to increase in recent years. In some situations, mobile communication devices have replaced landline telephones as the primary telephone for an individual. Because of various factors such as consumer demand, many portable electronic devices (many of them sized to be held or carried in a human hand) have continued to add new functionalities or increased processing capability. With such advancements may come demands for more power. Increased demand for power may be accompanied by a desire to manage heat that may be associated with supplying power to a portable electronic device.

### GENERAL

The disclosure is directed generally at a method and apparatus for cooling a portable electronic device via the creation of airflow within the portable electronic device by leveraging currently integrated device components. By leveraging these components, the footprint of the device may be minimally, if at all, impacted in order to provide increased cooling to the device. At most, there may be a need to incrementally add new components to the device which can still allow the original footprint of the device to be maintained. Multiple approaches can be used to support simultaneous airflow and vibration operations for each imbalanced or counterbalanced (vibrating) or balanced (non-vibrating) motor or pump.

The disclosure may be further directed at a method and apparatus for creating internal airflow to efficiently control the temperature of the device using an existing motor.

In a first aspect, the present disclosure may provide an apparatus comprising an airflow-generating device and a vibration component wherein the airflow-generating device is physically connected with the vibration component, and wherein movement of a moving part of the vibration component drives the airflow-generating device.

In another aspect, there may be provided a method of providing cooling to a portable electronic device comprising receiving a cooling indication, adding one of a balance or an imbalance to a cooling apparatus in response to the cooling indication, the cooling apparatus comprising a vibration component and an airflow-generating device, and driving the vibration component, wherein the driven vibration component drives the airflow-generating device.

Other aspects and features of the present disclosure will become apparent to those ordinarily skilled in the art upon review of the following description of specific embodiments of the disclosure in conjunction with the accompanying figures.

### BRIEF DESCRIPTION OF THE DRAWINGS

Embodiments of the present disclosure will now be described, by way of example only, with reference to the attached Figures, wherein:

Figure 1 is a schematic diagram of a portable electronic device having a cooling apparatus;

Figure 2 is a table outlining results of state changes for initially imbalanced or balanced systems;

Figure 3 is a flowchart outlining a method of cooling a portable electronic device;

Figure 4 is a flowchart outlining another method of cooling a portable electronic device;

Figure 5 is a schematic diagram of an embodiment of a cooling apparatus;

Figure 6 is a schematic diagram of another embodiment of a cooling apparatus;

Figure 7 is a schematic diagram of yet another embodiment of a cooling apparatus;

Figure 8 is a schematic diagram of yet another embodiment of a cooling apparatus;

Figure 9 is a schematic diagram of yet another embodiment of a cooling apparatus;

Figure 10 is a schematic diagram of yet another embodiment of a cooling apparatus;

Figure 11 is a schematic diagram of yet another embodiment of a cooling apparatus; and

Figure 12 is a schematic diagram of yet another embodiment of a cooling apparatus.

### DETAILED DESCRIPTION

Portable electronic devices come in a variety of sizes. Many are handheld, that is, sized to be held or carried in a human hand, and consequently, there are advantages to such devices being smaller and lightweight. Because of the size, weight and energy constraints associated with an active cooling system, many conventional small electronic devices (such as smart phones, portable computers, tablet-type electronic devices and remote controls) lack an active cooling system. As demands for power increase for the device, however, it may be advantageous to cool the device so that it can operate at a desirable performance level.

There is, as a practical matter, a limit to the amount of space available within the portable electronic device. In other words, there is a desire to maintain a certain footprint for the portable electronic device. Conventional independent cooling systems can be challenging to fit within the space constraints of some handheld devices. Also, as a practical matter, there is a general desire not to have too much weight in a portable electronic device. Conventional independent cooling systems can be bulky and may undesirably add weight to a portable electronic device. Besides size and weight, further factors may weigh against inclusion of cooling devices within portable electronic devices.

Generally, the present disclosure may provide a method and system for electronic device cooling. The method and system may take advantage of portable electronic device components that are currently used for other functionality to provide cooling to the portable electronic device. In other words, the disclosure may describe a method and a system that uses many components already present in a portable electronic device, such that cooling may be achieved without substantial changes in size and weight. For example, components that cause the device to vibrate may also drive airflow in the device. As described below, various embodiments may enable a device to produce vibration without substantial airflow, airflow without substantial vibration, or vibration and airflow together.

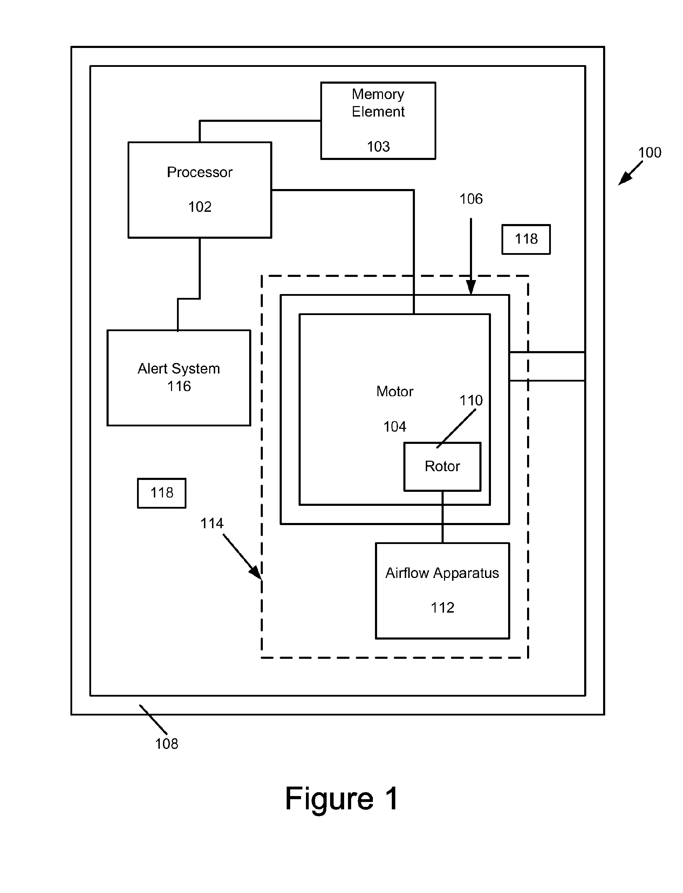

Turning to Figure 1, a schematic diagram of a portable electronic device, illustrated as a mobile communication device, is shown. The mobile communication device 100 may be capable of communicating wirelessly and may be able to convey voice, text graphics, or any combination thereof. The mobile communication device 100 includes a processor 102 which is communicatively connected to, or in communication with, a vibration component, depicted in Figure 1 as a motor 104, which is housed in a motor housing 106 mounted to a mobile communication device frame 108. The processor 102 is also communicatively connected to a memory element 103 which stores data relating to device operation such as, but not limited to, user profiles. The processor 102 may be configured to perform any of several functions described herein, which generally means that the processor 102 may be capable of carrying out those functions. In this context, "communicatively connected to" indicates a connection of communication, such that a signal communicated from one component is received by another. The components may be, but need not be, physically connected to one another, either directly physically connected or physically connected to one another via an intermediate tangible component, or element. As depicted in Figure 1, however, the processor 102 is physically connected to the motor 104, either directly or via one or more intermediate elements (such as the frame 108). Further, components that are communicatively connected or physically connected may be, but need not be, electronically connected to one another via conductors, wiring or one or more intermediate electronic elements. As depicted in Figure 1, the processor 102 is electronically connected to the motor 104, either directly or via one or more intermediate elements. In some embodiments, the processor 102 might be electrically connected to a driver (not shown), for example, which drives the motor 104. In this arrangement, alerts via vibration can be signaled to the user when a predetermined communication event occurs, such as, but not limited to, an incoming telephone call or e-mail message. For example, an incoming e-mail message may trigger the processor 102 to activate the vibration component, which vibrates when activated, thereby causing a vibration in the mobile communication device 100 which is detectable by a user. The vibration component may be embodied in any of several ways in addition to or other than motor 104, such as a pump, a microelectromechanical system (MEMS), a piezo element or other embodiments discussed below. Depending on the type of vibration component, a mobile communication device can be seen as an initially imbalanced system or an initially balanced system.

An imbalanced system is one in which the vibration component can provide a vibration alert without the assistance of an added effect (or counterbalance) while a balanced system is one in which an effect (or counterbalance) is added to the vibration component in order to provide a vibration alert. If the vibration component is an imbalanced system, the motor 104 (for example) may be a vibration motor and if the vibration component is a balanced system, the motor 104 can be the same as the motor which is used for powering a fan such as, but not limited to, squirrel fans, planar fans, reciprocating fans, coin fans or piezo fans or a motor for providing airflow to a fuel cell. These fans can also be used in initially imbalanced systems.

The motor 104 includes at least one moving part, such as a rotor portion 110 which can be physically connected to an airflow-generating device 112, such as (but not limited to) a miniature fan blade, an air pump rotor or a set of fans or fan blades. In this context, a physical connection generally means that a movement of the moving part in the motor 104 causes movement of a moving part in the airflow-generating device 112. Physically connected components need not be by direct contact but may be through one or more intermediate components or elements. The physical connection between the airflow apparatus or airflow-generating device 112 and the rotor portion 110 can be via any electromagnetic or mechanical means. In some embodiments, the physical connection need not be fixed but can be established and disestablished (e.g., with an electromagnetic coupling) under the control of an element such as the processor 102. The motor 104 (along with the rotor 110) and the airflow-generating device 112 can be seen as a cooling apparatus 114 for the mobile communication device 100. Some embodiments of the vibration component need not include a motor, and may have moving parts other than rotors connected to the airflow-generating device 112. Movement of the moving parts drives the airflow-generating device 112, which in turn moves air. Although described in the context of cooling, air movement may be useful for purposes other than cooling, such as supplying air to a component (e.g., improving the flow of airborne oxygen to a fuel cell or moving humid air away from a fuel cell). As will be discussed below, the moving part or parts of the vibration component may drive the airflow-generating device 112 without substantially causing vibration.

A potential benefit of such arrangements is that the cooling apparatus 114 need not be an independent or discrete entity, but may take advantage of other components within the mobile communication device 100 that are used for other functions, such as for vibration. The cooling apparatus 114 may be activated in response to the detection of conditions that may benefit from air movement. For example, the device 100 may include sensors 118 such as temperature sensors or sensors for sensing fuel cell operating characteristics or conditions relating to, but not limited to, pressure, temperature or the percentage of relative humidity. If the sensors 118 sense that the device requires or could benefit from cooling, a signal can be generated by one or more sensors and transmitted to the processor 102 such that, airflow can be generated in response to the signal. The airflow may be, but need not be, generated promptly after the signal is generated. In some embodiments, airflow can be deferred until an alert (such as a vibration) is required, such that the alert (e.g., vibration) and air movement can occur at the same time. Alternatively, the processor 102 can transmit a signal to initiate the cooling apparatus 114 without the alert or vibration. The mobile communication device 100 may further include an alert system 116 for providing alerts to the user, as will be described in more detail below.

In one mode of operation, to activate the cooling apparatus 114, the processor 102 determines the type of alert that is appropriate to signal a communication event (such as an incoming telephone call or an incoming text message) and then activates the vibration component, which in turn drives the cooling apparatus. Activation of the cooling apparatus 114 may be in response to one or more signals from a sensor 118. In another mode, the processor 102 may activate the vibration component, which in turn drives the cooling apparatus, without signaling a communication event or vibrating. A single portable electronic device may operate in either mode. Other modes are also contemplated and are non-exhaustively described below.

For purposes of further illustration, operation will be described in an apparatus in which the vibration component includes a motor 104, with a moving part embodied as a rotor 110, and the movement of the rotor 110 can drive the airflow-generating device 112. The system may initially be either balanced or imbalanced which may then be changed (from balanced to imbalanced or vice versa) depending upon whether the airflow-generating device 112 is to be driven with or without vibration. In order to change the state of the system via the rotor portion 110, a load (such as an electrical or magnetic load or field or a mechanical load) can be applied to the rotor portion 110. In one approach, the rotor portion 110 is connected to the airflow-generating device 112 through electromagnetic or mechanical means but neither the connection nor the airflow apparatus itself would disrupt or change the state of the existing system. The can be described as a "No Effect" system. For a balanced system, adding vibration would then entail changing the state by, for example, applying a counterbalance.

In a second approach, the rotor portion 110 is connected to the airflow-generating device 112 in a manner that causes an offset to the nature of the existing system. This can be described as an "Effect" system. For imbalanced or counterbalanced systems, the offset brings the system into non-vibration balance. Conversely, for balanced systems, the offset created by the airflow-generating device 112 can cause the system to behave as imbalanced. Application of a further load or effect (discussed below in the context of adding balance or imbalance) can be used to generate vibration with or without airflow. Vibration-only and airflow-only operations could both be accomplished in similar manners.

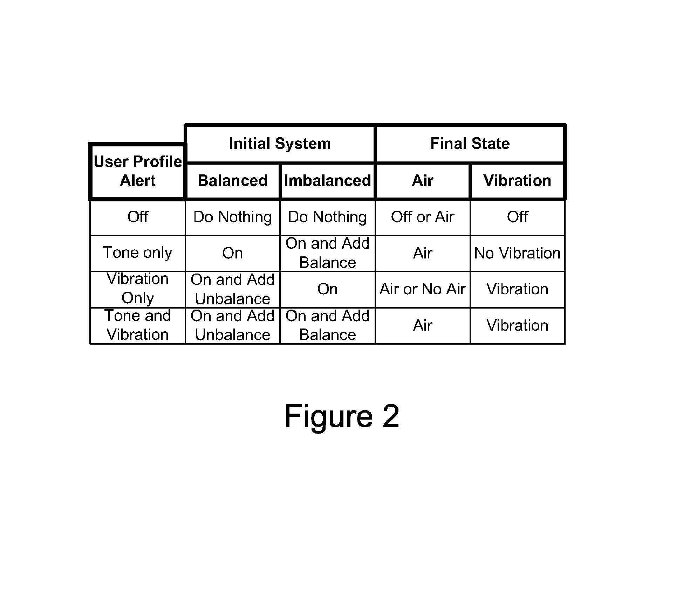

Figure 2 provides a table that outlines the results when state changes for imbalanced or balanced systems occur. Although described with respect to the user profile, it will be understood that with respect to the airflow generation portion of this system, it can be implemented or activated without needing to check the user profile. In general, one or more user profiles may be stored in the memory element 103 accessible by the processor 102.

In one scenario, when a communication event occurs which would ordinarily result in the user being alerted, if the user profile indicates that there is to be no alert, or the alert system is off, or if the alert is to be communicated by a manner other than vibration, then no signal is transmitted from the processor to the alert apparatus (i.e., the vibration component) in either the balanced or imbalanced system. If there is a desire to have airflow, however, a signal can be transmitted by the processor 102 to the motor 104 or the airflow-generating device 112 or both such that the motor 104 drives the airflow-generating device 112 to cause airflow to be generated. Optionally, the processor 102 may apply a further balance or imbalance to change any vibration or lack thereof that may otherwise be caused by activation of the motor 104.

In another scenario, when a communication event occurs and the user is to be alerted via a tone rather than a vibration, airflow can still be generated. In this case, if the system is an initially balanced system, a signal is transmitted to the motor 104 to activate and drive the airflow-generating device 112, thereby generating airflow while the alert is being provided. If the system is an initially imbalanced system, a load or effect may add balance to the system so that the when the alert is provided to the user, airflow can be generated with little or no attendant vibration. Balance (or imbalance) may be added to the vibration component, or the airflow-generating device, or both, or the cooling apparatus (the vibration-component-airflow-apparatus system) as a whole. Balance (or imbalance) may be added by or under the control of the processor 102 using any of several techniques. For example, balance (or imbalance) may be added by connecting a weight to the system (or disconnecting a weight from the system). The weight may be connected (or disconnected) mechanically, for example, or by activating or deactivating an electromagnetic linkage. Balance (or imbalance) may also be added by imparting electromagnetic loads or fields that physically resist or enhance the motions of moving parts without changing any distribution of weight. Balance (or imbalance) may further be added by moving a component (such as a component of a rotor 110) from one place to another so as to affect the balance, or by adjusting the angular velocity of one or more components. Balance (or imbalance) may further be added by establishing or disestablishing the physical connection between the airflow-generating device 112 and the rotor 110. Other forms of adding balance (or imbalance), including combinations of these particular techniques, may also be employed. Whether balance or imbalance is to be added may be under the control of the processor 102.

In a further scenario, when a communication event occurs and the user is to be alerted via a vibration, for an initially balanced system, an imbalance is added to the system so that the vibration alert can occur. For an initially imbalanced system, the processor 102 transmits the signal to the motor 104, causing the motor 104 to vibrate and the vibration alert is provided to the user. Airflow can be generated with the vibration, or if further cooling is not desired, the motor 104 need not drive the airflow-generating device 112.

In still a further scenario, when a communication event occurs and the user is to be alerted via both a vibration and a tone, for an initially balanced system, the processor transmits a signal to add an imbalance to the system to generate the vibration to alert the user. The airflow-generating device 112 may also be activated to produce airflow to cool the device. The tone alert and the vibration alert may be alternated, such that the processor 102 adds an imbalance and then removes the imbalance according to the timing associated with the alert. For an initially imbalanced system, a balance is added to the system and then removed in order to allow the system to alternate between the tone alert and the vibration alert. Depending on the set up of the cooling apparatus or system and airflow requirements, airflow can also be generated to assist in cooling the device via the airflow apparatus. In a typical embodiment, airflow may not always be desired but it may be the default setting to generate airflow with vibration.

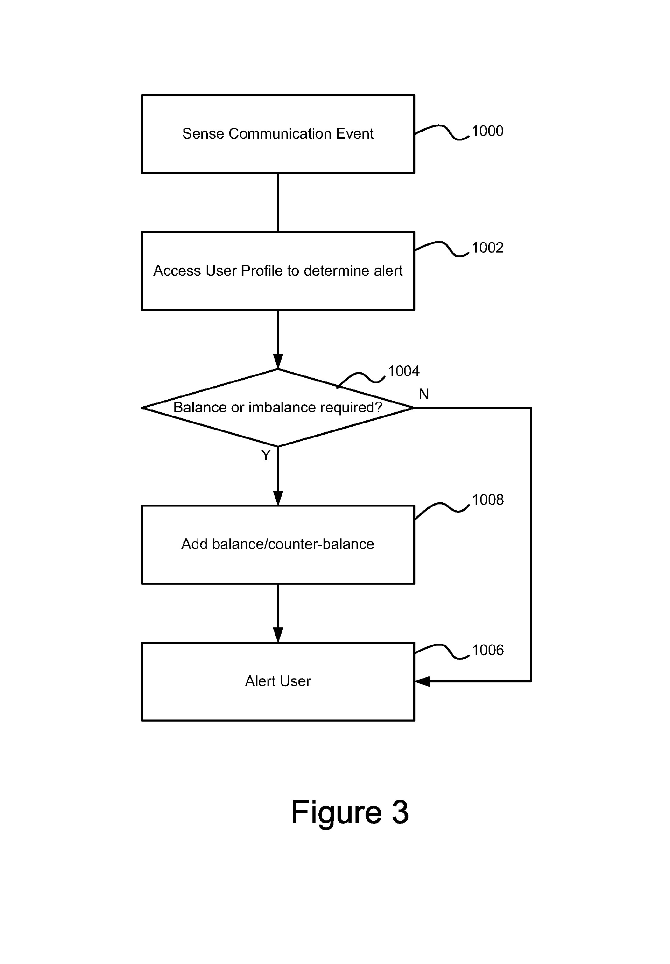

Turning to Figure 3, a flowchart outlining a method of handheld device cooling is shown. It is assumed that the processor recognizes whether the cooling apparatus 114 (including the vibration component and the airflow-generating device) is in an initially balanced or imbalanced system. The operation of this embodiment begins when a communication event (such as, but not limited to, an incoming email message, an incoming telephone call or a calendar reminder) occurs or is sensed 1000 by the processor 102. Optionally, the processor 102 may access the memory element 103 to determine 1002 the active user profile. The user profile provides the selected method of alerting the user of the communication event.

As shown in the example above (in Figure 2), the alert can be seen as off (where no alert is required but airflow can be generated), tone only (or air only), vibration only (but airflow can be generated) or both tone and vibration. After determining the type of alert and with the prior knowledge of the initial state of the system, the processor can then determine 1004 whether a balance or an imbalance should be added to the system. This determination can be performed either with the cooling apparatus in an initially off state or based on the previous state of the cooling apparatus. In the event the processor determines that a balance (or imbalance) should be added, the processor can add the balance (or imbalance).

The inclusion of the balance/counterbalance allows the overall system to enter the necessary state for the desired alert to be signaled. Alternatively, the processor can remove a balance/counterbalance if one is connected by default in order to allow the alert to be signaled. Similarly, if there is a desire to not provide any further cooling, the processor can make the necessary decisions to only provide the alert without generating airflow. Whether or not airflow should be generated may be a function of one or more factors, such as (but not limited to) user input, airflow commands programmed into the processor 102, or may be responsive to the current temperature within the device or ambient temperature surrounding the device or signals from sensors 118.

If no balance or imbalance is required, the processor transmits 1006 a signal to an alert system to alert the user of the communication event. If a balance or imbalance is required, the processor 102 adds 1008 the balance or imbalance and then alerts 1006 the user according to the user profile. If airflow is to be generated, the processor 102 can establish a physical connection between the vibration component and the airflow-generating device 112 (if the connection between the vibration component and the airflow-generating device 112 is of a kind that can be physically established or disestablished

For an initially balanced system, if there is no alert necessary, there is no signal transmitted by the processor to the cooling apparatus or alert system to indicate the communication event, however, the airflow-generating device can still be connected. If a tone alert is required and since the system is initially balanced, the processor transmits a signal to the cooling apparatus to be actuated, thereby creating air within the device to cool the device or for any other functionality such as supplying air to a fuel cell. If a vibration alert is required, a signal is transmitted to the cooling apparatus or alert system to add an imbalance so that the vibration alert can be generated. Depending on the requirements of the device, airflow can also be generated. Alternatively, if the active user profile requires both a tone and vibration alert to be generated, a signal is transmitted to the cooling apparatus to add the imbalance for the vibration portion of the alert, thereby providing the necessary vibration for the alert and then a signal is transmitted to remove the imbalance for the tone portion of the alert. Airflow can also be generated as a result of the general motion of the motor.

For an initially imbalanced system, if there is no alert necessary, there is no signal transmitted by the processor to the cooling apparatus to indicate the communication event however, the airflow-generating device can still be connected so that normal operation of the motor, or other device components can generate air flow. If only a tone alert is required, the processor transmits a signal to the cooling apparatus to add a balance to the system thereby negating the vibration by the vibration component, such as the vibration motor, and also generating airflow via the airflow-generating device and then alerting the user. As will be understood, the connection of the airflow-generating device can act as the necessary balance for the system. If only a vibration alert is required, the processor transmits a signal to the vibration component to vibrate, thereby creating the alert for the user indicating the communication event. As will be understood, airflow can be created in this scenario with the activation of the airflow-generating device via methods discussed above, with the assumption that the airflow-generating device does not have any effect on the balance of the system. Finally, if both a tone and vibration alert are required, a series of signals are transmitted to the cooling apparatus to add a balance when the tone alert is being transmitted and to remove the balance when the vibration portion of the alert is being activated. There are many variations in these scenarios, including balance (or imbalance) of individual components, balance (or imbalance) of sets of components, ways in which components may affect one another, techniques in which balance (or imbalance) may be added, whether vibration is desired or not, and whether airflow is desired or not. Some of these variations have been discussed, but all of these variations are contemplated. In addition, it may be easier to add an imbalance to a balanced system than to add a balance to an imbalanced system, but both approaches are contemplated as embodiments within the current disclosure.

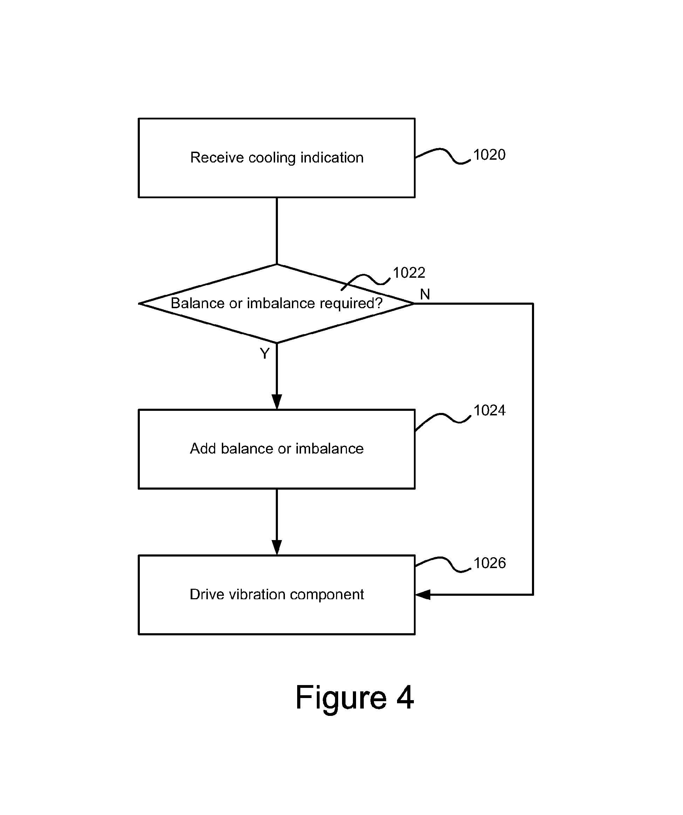

Turning to Figure 4, a flowchart outlining another method of portable electronic device cooling is shown. In this method, airflow or cooling is unrelated to user alerts. The operation of this embodiment begins when the processor receives 1020 a cooling indication. A cooling indication may be, but need not be, associated with a desire for cooling. A cooling indication may be in the form of, for example, a temperature or humidity signal generated by a sensor 118, or a command from a user, or a timed cooling event or a programmed response to an event in the electronic device (such as a large current draw). In general, a cooling indication may result when it is beneficial to provide airflow but not vibration (which might be misinterpreted as an alert). In response to the cooling indication, the processor 102 determines 1022 whether a balance or an imbalance should be added based on the initial state (balanced or imbalanced) of the vibration component, and the processor adds 1024 balance or imbalance if appropriate. The processor then drives the vibration component 1026, which in turn drives the airflow-generating device 112 with reduced or canceled vibration. In some embodiments, a portable electronic device may, as a default condition, include a vibration component and airflow apparatus 114 that are balanced, such that no decision need be made whether to add balance to get airflow without vibration.

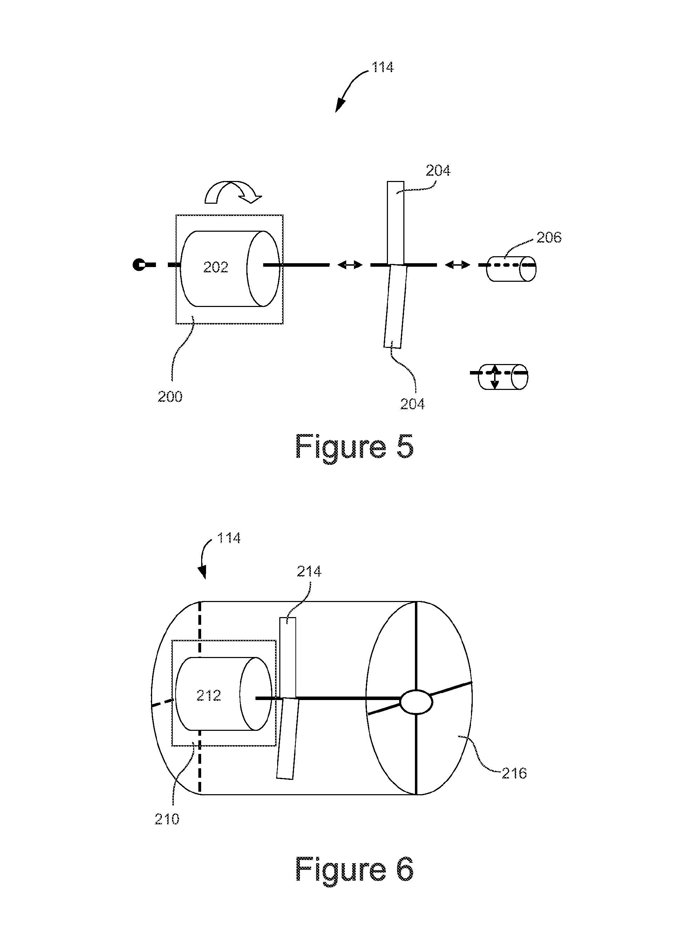

Turning to Figure 5, another embodiment of a cooling apparatus is shown. It will be initially assumed that the apparatus is located within an initially imbalanced, or counterbalanced, system. As shown, the cooling apparatus 114 includes a vibration component, such as a vibration motor 200, which includes a rotor portion 202. The vibration motor 200 is generally used to provide vibrations (when the device has been set to vibration mode) to provide alerts to the user.

An airflow-generating device or airflow apparatus, such as a set of fan blades 204 (which in the current embodiment is two), is located between the motor 200 and a balance, counterbalance, or weight 206 (any object having mass) which is used to assist in changing the state of the device in order to produce air flow within the portable electronic device when the alert is to be tone only. Alternatively, the balance 206 can be achieved via a shift in an electrical field or electromagnetic field and does not have to be a specific discrete structure. In yet another embodiment, the balance can be provided by a mounting bracket that supports the vibration motor 200 within the motor housing. Along with those previously discussed, various other methods of adding a balance (or imbalance) to the system are contemplated. In some embodiments, if the balance 206 is connected in an inline connection, the movement of the balance 206 will be in a direction parallel to the axis connecting the two parts 206 and 202. Typically the balance 206 may be deployed along the axis. In other embodiments, if the balance 206 is connected in a radial connection, the movement of the balance 206 will be circular, with the balance deployed to rotate about the axis connecting the two parts 206 and 202. For the current embodiment, although the balance 206 is shown as being located on one side of the rotor portion 202, it will be understood that the balance 206 can also be connected directly on the other side of the rotor portion 202.

In one embodiment, the connection between the rotor portion 202 and the set of fan blades 204 can be created to offset the existing imbalanced system thereby bringing the device into a vibrationless balanced system. Therefore, when a communication event occurs and only a tone alert is required, the processor transmits a signal to the alert system to alert the user and to then connect the airflow-generating device to the motor 200 to generate airflow as the fan blades 204 are used to balance the system.

If a vibration alert is required and air flow is required, the processor transmits a signal to connect the weight 206 to the system to allow vibration to be restored within the system so that the vibration alert can be transmitted to the user with the air flow apparatus still connected and air flow generated. If a vibration alert is required and airflow is not required, the processor can transmit a signal to have the fan blades 204 disconnected from the system (thereby causing the system to return to an imbalanced state). In the current embodiment, the balance 206 can be easily connected to, or disconnected from, the rotor portion 202.

Alternatively, if the connection between the rotor portion 202 and the set of fan blades 204 has no effect on the overall state of the system, if a tone alert is required, the processor transmits a signal to the connect the weight to the system so that movement of the motor does not cause any vibration but can generate airflow through its connection with the airflow-generating device 204. If a vibration alert is required and airflow is required, the processor 102 transmits a signal to the alert system to provide the alert signal, which causes the fan blades 204 to provide airflow during the vibration alert. If a vibration alert is required and airflow is not required, the processor transmits a signal to have the fan blades disconnected prior to the alert being signaled.

In order to determine whether a balance or imbalance is required, a table such as that in Figure 2 may aid in the determination.

Turning to Figure 6, a schematic diagram of another embodiment of a cooling apparatus for use in an imbalanced motor system is shown. The cooling apparatus 114 includes a motor 210 having a rotor portion 212. The rotor portion 212 is connected to an airflow-generating device 214, such as a set of fan blades. In this embodiment, it is assumed that the connection between the rotor portion 212 and the airflow-generating device 214 or the airflow-generating device itself does not disrupt the balance, or state, of the imbalanced system in a No Effect system. In this embodiment, the cooling apparatus 114 is housed within a motor housing 216. The motor housing 216 can be a sealed or open-mesh. Furthermore, the cooling apparatus 114 can be realized either in centre or end fan configurations.

In operation of this embodiment, when an incoming telephone call or email message is sensed by the processor, the processor determines the type of alert that is required to signal this communication event to the user. As the system is assumed to be imbalanced, if a vibration alert and air flow are required, at least one signal is transmitted to the vibration component such as a vibration motor to vibrate and to connect the airflow-generating device to the system, thereby causing the airflow-generating device 214 to be engaged and to generate airflow within the device thereby cooling the components while the vibration alert is being generated. This may also be done in response to a request for cooling.

If a tone alert is required, the system is balanced with the addition of a balance system. This balance can be achieved by a physical connection to an independent weight or via electromagnetic means or any other ways described above. After the balance is added, the alert can be transmitted to the user and the airflow generated by the airflow-generating device with the assumption that the fan blades are connected.

In an alternative embodiment, if the connection between the airflow-generating device 214 and the rotor portion 212 or the airflow-generating device itself provides a balance to the system, the mounting of the motor to the motor housing 216 can be used as a counterbalance to allow the system to remain imbalanced at the outset. Alternatively, the processor can add a balance to the system, where required. If the imbalanced system remains in a state of balance, if a tone alert is required, the processor does not have to add a balance to system to provide a tone only alert (as outlined in Figure 2) as the system should be recognized as being in the balanced state. Similarly, if a vibration alert is required, the processor transmits a signal to add an imbalance to the system or removes the balance (if it can be controlled by the processor). If the balance is added via the mounting of the motor to the motor housing, this can be seen as a permanent balance to the system so that the initially imbalanced system would be operating in a default balanced initial position. As with the other embodiments, if airflow is required, the fan blades can be connected to the motor.

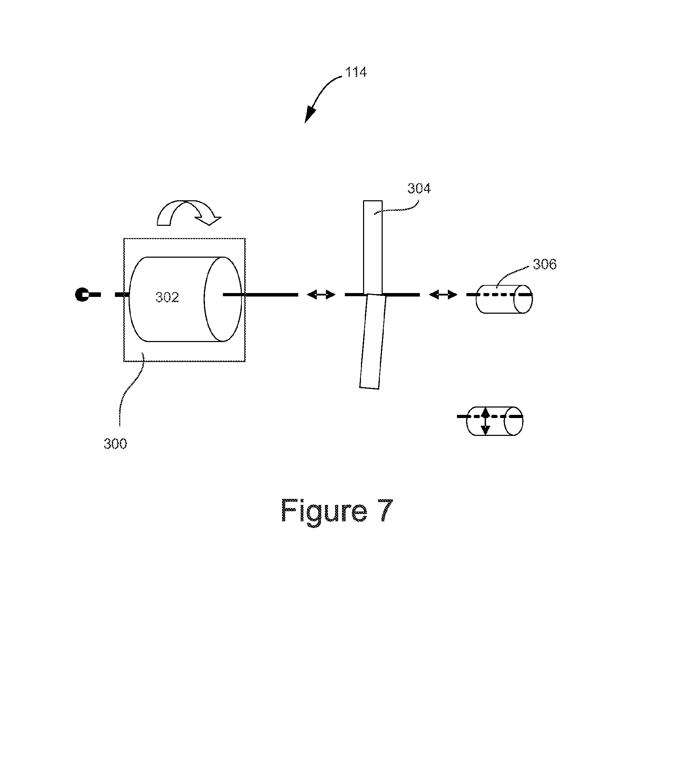

Turning to Figure 7, an embodiment of a mobile device cooling apparatus in an initially balanced system is shown. Figure 7 is similar to Figure 5 and indicates that while the systems may look alike, it is the understanding of the initial state that differentiates them. The cooling apparatus 114 is quite similar to the apparatus for the system shown in Figure 5, however the motor is not a vibration motor but a motor for an existing component such as an air pump within the device.

As shown, the cooling apparatus 114 within the balanced system includes a motor 300 having a rotor portion 302. As discussed above, the motor 300 is generally used to provide the necessary energy or power to components within the device, such as an air pump or a fan.

An airflow-generating device, such as a set of fan blades 304, is located between the motor and a balance, or weight 306. The weight 306 can be easily connected to or disconnected from, the rotor portion 302 in manners discussed above. Also, although shown as being located on one side of the rotor, it will be understood that the balance can also be connected directly on the other side of the rotor. The balance 306 and the rotor portion 302 can be connected via an inline connection or a radial connection. Operation of the balance in a radial or inline connection is discussed above.

In the current embodiment, it is assumed that neither the connection between the airflow-generating device and the rotor portion 302 nor the airflow-generating device itself 304 would disrupt the existing balanced system (No Effect system). Therefore, the inclusion of the weight causes the system to be in an overall imbalanced state, when it is added.

In operation, when a communication event is sensed, a determination of the type of alert that is required is performed. If a tone alert is required, the processor transmits a signal to the alert system to signal the user and the airflow-generating device is connected in order to generate airflow as a result of this signal. If a vibration alert is required, the processor transmits a signal to connect the weight 306 to the system thereby producing an imbalanced system. Once this imbalanced system is created, a signal is transmitted to the alert system to alert the user, thereby causing the system to vibrate and create airflow via the airflow-generating device (if required). As discussed above, if airflow is not required, the airflow-generating device can be disconnected from the system.

As has been mentioned, adding a balance or an imbalance can be via many different modes, such as, but not restricted to, the inclusion of the weight. This can include the use of the airflow-generating device as the necessary imbalance in an Effect system.

In the discussion above, most of the decisions and controlling operations have been performed by or under the direction of a processor 102. Although depicted in Figure 1 as a single element, the processor 102 may be embodied as one or more components, For example, the processor may be embodied as a general-purpose microprocessor, or a stand-alone thermal control sensing subsystem or a processor associated with a Power Management Integrated Circuit (PMIC), or any combination thereof.

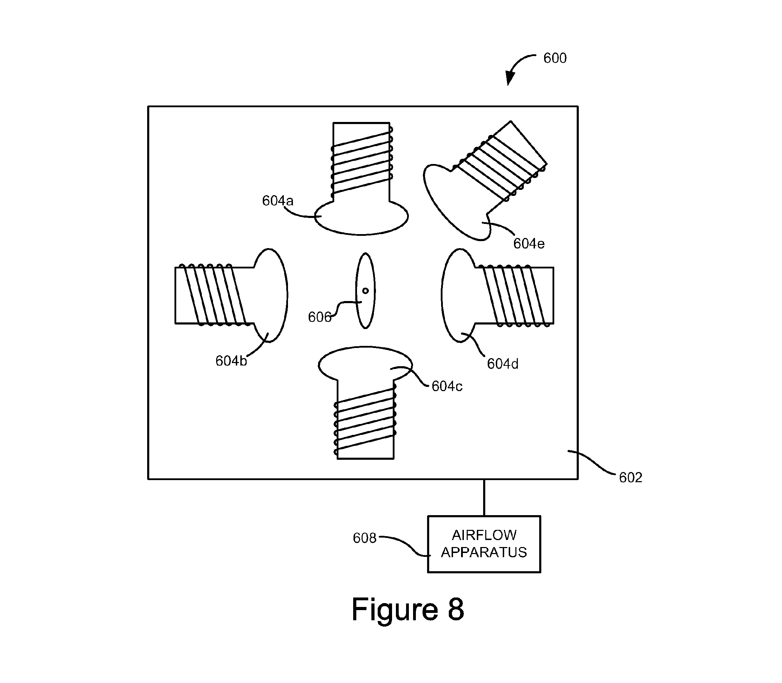

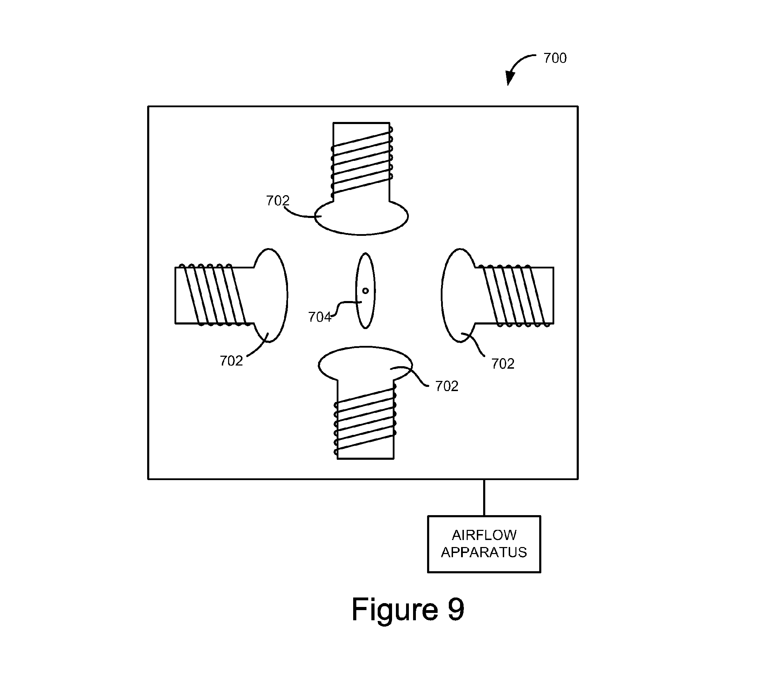

Turning to Figures 8 and 9, further embodiments of a cooling apparatus are shown. For instance, the balance or imbalance can be implemented via the motor.

By changing the number of poles within the motor or the position of the poles within the motor can provide the necessary balance or imbalance to a system either initially or in response to signals from the processor to add the balance or imbalance. Therefore, when implementing the balance or imbalance in a system by the location of the poles, one or more of the poles can be offset within the system so that the rotation of the rotor is skewed. In another embodiment, the balance or imbalance can be implemented via the number of windings which are used around each pole. For instance, around one stator, the number of windings can be increased to provide an imbalance as the rotor is rotating. In another embodiment, the motor speed can be used to provide the necessary balance or imbalance in response to signals from the processor.

Turning to Figure 8, an embodiment of a cooling apparatus for providing cooling for a portable electronic device is shown. In this embodiment, the cooling apparatus 600 includes a motor 602 having a plurality of stators 604 or being a multi-pole stator, each of the stators 604 having a set of windings thereby providing a magnetic field to operate a central rotor portion 606.

Depending on how the apparatus is configured, the system can be initially balanced via stators 604a, 604b, 604c and 604d with "stand-alone" stator 604e serving to be an imbalance, when required.

Alternatively, the system can be initially imbalanced with each of the stators 604 being active. In this embodiment, the balance can be provided external to the motor or can be implemented by de-activating the "stand-alone" stator 604e. Therefore, in operation, after the processor has sensed the communication event and has determined the alert required, the "stand-alone" stator can then be manipulated accordingly to achieve the required result. An airflow-generating device or airflow apparatus 608 is also included within the system to provide the airflow to cool the device if necessary. The cooling may also be initiated when the processor receives an indication that cooling is required.

In another embodiment (as shown in Figure 9), the motor 700 can include a set of four stators 702 surrounding the rotor 704. In this embodiment, the balance, or imbalance, can be implemented via a change in the rotational speed (RPM) of the rotor 704. For instance, the strength of the poles can be increased or decreased, as desired, to effect the rotation of the rotor thereby providing the required balance or imbalance to allow the system to provide the necessary alert to the user and to generate airflow when required.

In yet a further embodiment, the number of windings that surround each stator can be selected so that a balance or imbalance can be introduced to the system when required. For instance, if one of the stators has double the windings of the other stators, for an initially balanced system, these extra windings are not initially operational. When an imbalance is required, the extra windings can be activated to provide an imbalance to the system. Alternatively, in an imbalanced system, the extra windings can be initially active and when a balance is required, they can be de-activated or an external balance can be introduced to the system.

The rotor portion of either embodiment can also include a set of windings which either by themselves or in conjunction with the stator (or other means) assist in providing a balance or imbalance to the system. For instance, the rotor can include a main winding and then include a second winding to provide a balance or imbalance with a separately controlled field.

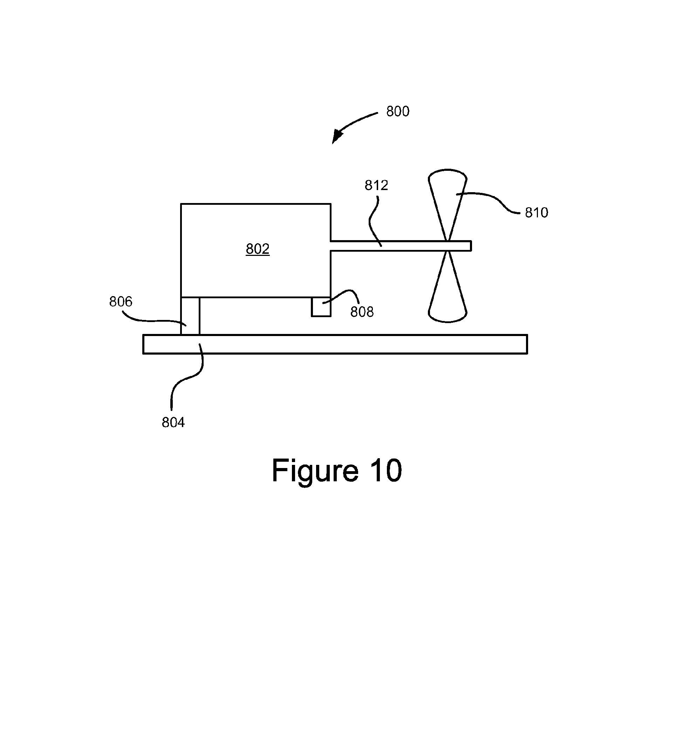

Turning to Figure 10, a further embodiment of cooling apparatus for providing cooling to a portable electronic device is shown. In this embodiment, the apparatus 800 includes a vibration component such as a motor 802 which is mounted to a frame 804 of the handheld device via a mounting bracket 806. A magnet 808 is also located proximate the motor 802. An airflow-generating device or airflow apparatus 810 is connected to the motor 802 via a shaft 812.

In one embodiment, the magnet 810 is an electromagnet that can provide the necessary balance or imbalance to the system when a communication event is sensed and there is a need to introduce the balance or imbalance to the system based on the determination of the type of alert required. In this embodiment, the electromagnet is provided with a current via a signal transmitted by the processor after the type of alert is determined.

Alternatively, if the magnet 810 is a permanent magnet, it is assumed that the magnet provides an automatic balance or imbalance to the initial system. In this scenario, with an initially balanced system and the permanent magnet, the system is already deemed to be imbalanced such that when a communication event arrives and vibration is required, there is no need to provide an imbalance to the system. However, if one wishes to provide a further imbalance, this can also be possible as long as the further imbalance does not act as an overall balance to the system. Alternatively, if the user profile is set for tone only, a balance is introduced to the system to counteract the effects of the permanent magnet.

Similarly, for the initially imbalanced system, the permanent magnet can serve as a balance to the system such that the system is actually balanced. Therefore, when a communication event arrives and a vibration is required, a further imbalance is required to be added to the system in order to achieve the necessary vibration. In one embodiment, this further imbalance can be provided by the airflow apparatus. Alternatively, it can be implemented in any number of methods as outlined above.

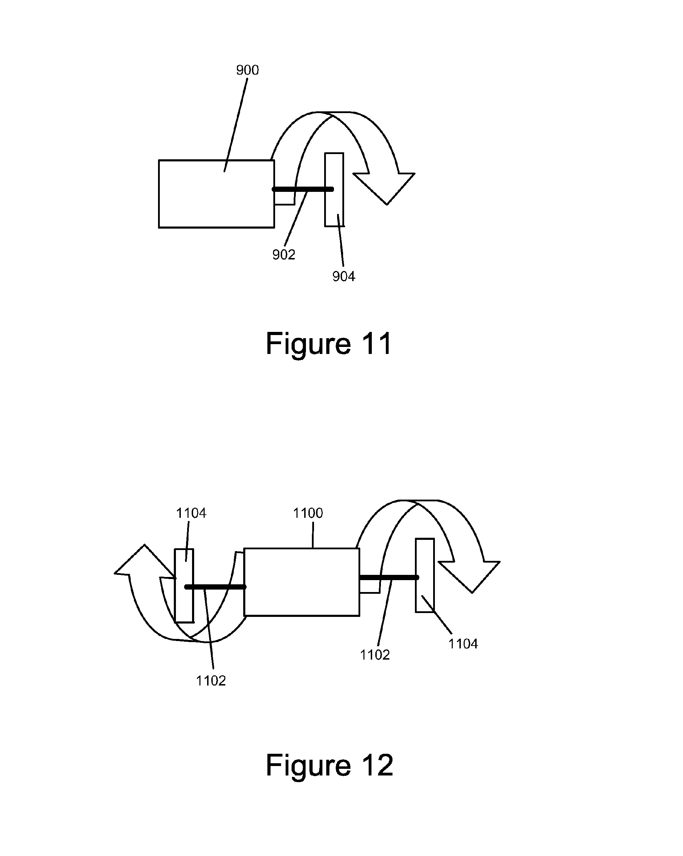

Turning to Figure 11, a schematic diagram of yet another embodiment of a cooling apparatus is shown. In this embodiment, the cooling apparatus uses angular velocity as the balance/imbalance mechanism. The cooling apparatus includes a vibration component such as a motor 900 which rotates about a shaft 902. At the end of the shaft is an airflow-generating device or airflow apparatus 904. The speed of rotation of the motor 900 can provide the necessary balance or imbalance to a system in order to provide the required alert to the user.

For instance, assuming a balanced system and that rotation of the motor 900 at a known or predetermined speed adds an imbalance to the system, if a communication event is sensed and a tone alert is requested, the motor 900 can rotate at a speed above or below the predetermined speed to activate the airflow-generating device 904 while maintaining a balanced system (assuming the airflow-generating device is a no-effect system). If the communication event is sensed and a vibration alert is required, the processor transmits a signal to have the motor rotate at a speed which is at the predetermined speed in order to add an imbalance to the system, thereby activating the airflow-generating device 904 and creating the vibration alert. Combining this embodiment with different balances or imbalances is also contemplated, as is using feedback techniques to obtain balance or imbalance.

Turning to Figure 12, another embodiment of a cooling apparatus is shown. In this embodiment, the cooling apparatus 1100 includes a vibration component such as a motor 1102 through which a shaft 1104 is located. The shaft 1102 can be a single shaft or can be two separate shafts located at opposite ends of the motor 1102. At the end of each shaft is a set of blades 1104 which function as an airflow-generating device or airflow apparatus.

In operation, rotation of the motor 1102 in one direction could add or remove a balance from a system and then rotation in the other direction would perform the opposite task. Another possibility is that rotation in one direction has no effect on the system and therefore only produces airflow assuming that the airflow-generating device has no effect on the balance or imbalance of the system.

For an imbalanced system, when a communication event arrives, a check is performed to determine the type of alert required for the communication event. If a tone alert is required, the processor determines the direction of rotation for the motor that is able to balance the system, such as clockwise. The processor then transmits a signal to the motor to rotate clockwise, thereby generating airflow and balancing the system so that no vibration alert is provided. If a vibration alert is required, the processor determines the direction of rotation for the motor that is able to maintain the system in an imbalanced state, such as counterclockwise. The processor then transmits a signal to the motor to rotate counterclockwise to provide the vibration alert and to generate airflow via the blades 1104 attached to the shaft. If there is no requirement for airflow generation with the vibration alert, the fan blades 1004 can be disconnected from the shaft prior to the counterclockwise motor rotation.

Furthermore, with respect to Figure 12, when the motor is rotating about the shaft, a corkscrew effect may be used in order to provide balance or imbalance. After providing balance or imbalance, the motor can return to the initial position and therefore wait until the arrival of the next communication event or next request for cooling. The time for the return of the motor to the initial position is negligible and therefore, this action would not be sensed by the user.

In yet a further embodiment, the balance can be implemented mechanically via a weight located at one end of the motor shaft. The balance can be connected via a centrifugal locking mechanism that can be activated if the shaft rotates at a certain predetermined speed such that when the speed is met, the balance is attached. In this embodiment, the speed of the shaft can be controlled by the processor.

In scenarios where there is an initially balanced system which is then turned into a default imbalanced system due to the presence of a permanent magnet or the presence of a permanent imbalance, the system can be treated as an imbalanced system when communication events are sensed. Similarly for an initially imbalanced system that becomes a default balanced system due to the presence of a permanent balance (which can be implemented in any manner), the system can be treated as a balanced system when communication events are sensed.

In yet a further embodiment, it will be understood that the table of Figure 2 can be used to assist in determining how to provide alerts within a balance or imbalanced system. Therefore, any number of balances or imbalances can be used to counteract other imbalances or balances to provide alerts.

As will be further understood, the initial state of the system must be stored within the processor or memory in order to determine the appropriate steps, or actions, such as to add the balance or imbalance, in order to provide an alert or cooling. The continued additions of balances and imbalances to the system should also be tracked so that the processor can determine what is appropriate to transmit alerts when communication events occur or when cooling of the device is signalled.

A number of potential benefits of the concepts have already been mentioned, A further potential benefit is that, for mobile communication devices, some of the described techniques may avoid electromagnetic interference, so that the cooling apparatus does not adversely affect operation of other mobile communication device parts such the antenna or radio-frequency components.

A further possible advantage of one or more embodiments is the employment of components in multiple roles. For example, the same motor that can power vibration may also power airflow. Such multiple functionality may save space such that incorporating active airflow into a mobile device need not substantially increase the footprint of the mobile device. Further benefits may also be achieved in terms of cost savings and ease of assembly.

In the preceding description, for purposes of explanation, numerous details are set forth in order to provide an understanding of the embodiments of the disclosure. However, not all of these specific details are required in order to practice the disclosure. The above-described embodiments of the disclosure are intended to be examples only. Alterations, modifications and variations can be effected to the particular embodiments without departing from the scope of the disclosure, which is defined solely by the claims.

## Claims

1. An apparatus comprising:
an airflow-generating device;
a vibration component;
wherein the airflow-generating device is physically connected with the vibration component; and wherein movement of a moving part of the vibration component drives the airflow-generating device.

2. The apparatus of Claim 1, further comprising a processor,
wherein the processor is configured to establish the physical connection of the airflow-generating device and the vibration component.

3. The apparatus of Claim 1, further comprising a processor,
wherein the processor is configured to determine whether one of a balance and an imbalance to either of the airflow-generating device and the vibration component is required to cause the vibration component to vibrate.

4. The apparatus of claim 3, wherein the processor is further configured to add one of the balance and the imbalance to one of the vibration component and the airflow generating device.

5. The apparatus of Claim 4, wherein the vibration component includes a motor, and wherein the processor is configured to add one of the balance and the imbalance to the motor.

6. The apparatus of any one of Claims 1 to 4, wherein the vibration component comprises one of a motor, a pump, a microelectromechanical system (MEMs) or a piezo element.

7. The apparatus of any preceding Claim, wherein the physical connection of the airflow-generating device and the vibration component defines an axis, the apparatus further comprising a weight deployed along the axis.

8. The apparatus of any preceding Claim, wherein the physical connection of the airflow-generating device and the vibration component defines an axis, the apparatus further comprising a weight deployed to rotate about the axis.

9. The apparatus of any preceding Claim, wherein the airflow-generating device comprises at least one of a squirrel fan, a planar fan, a reciprocating fan, a coin fan and a piezo fan.

10. A method of providing cooling to a portable electronic device comprising:
receiving a cooling indication;
adding one of a balance or an imbalance to a cooling apparatus in response to the cooling indication, the cooling apparatus comprising a vibration component and an airflow-generating device; and
driving the vibration component, wherein the driven vibration component drives the airflow-generating device.

11. The method of claim 10, wherein driving the vibration component causes reduced vibration.

12. The method of Claim 10 or Claim 11, further comprising:
determining whether the cooling apparatus is an initially balanced or initially imbalanced system; and
determining whether adding the balance or imbalance result in vibration when the vibration component is driven.

13. The method of any one of Claims 10 to 12 wherein adding one of a balance or imbalance comprises physically connecting a weight to the cooling apparatus.

14. The method of any one of Claims 10 to 13 wherein adding one of a balance or imbalance comprises activating or deactivating a rotor within the vibration component; and/or rotating the vibration component at a selected speed.

15. The method of any one of Claims 10 to 14 wherein adding one of a balance or imbalance comprises:
providing a current to an electromagnet located adjacent the vibration component.

## Amended claims

### Amended claims in accordance with Rule 137(2) EPC.

**1.** An apparatus for use within a portable device comprising:
an airflow-generating device located within the portable device;
a vibration component;
wherein the airflow-generating device is physically connected with the vibration component; and wherein movement of a moving part of the vibration component drives the airflow-generating device; and
a processor,
wherein the processor is configured to determine whether the portable device is an initially balanced or an initially imbalanced system and whether one of a balance and an imbalance to either of the airflow-generating device and the vibration component is required to cause the vibration component to vibrate.

**2.** The apparatus of Claim 1, further comprising a processor,
wherein the processor is configured to control the physical connection of the airflow-generating device and the vibration component via transmission of a signal.

**3.** The apparatus of claim 1, wherein the processor is further configured to add one of the balance and the imbalance to one of the vibration component and the airflow generating device.

**4.** The apparatus of Claim 3, wherein the vibration component includes a motor, and wherein the processor is configured to add one of the balance and the imbalance to the motor.

**5.** The apparatus of any one of Claims 1 to 3, wherein the vibration component comprises one of a motor, a pump, a microelectromechanical system (MEMs) or a piezo element.

**6.** The apparatus of any preceding Claim, wherein the physical connection of the airflow-generating device and the vibration component defines an axis, the apparatus further comprising a weight deployed along the axis.

**7.** The apparatus of any preceding Claim, wherein the physical connection of the airflow-generating device and the vibration component defines an axis, the apparatus further comprising a weight deployed to rotate about the axis.

**8.** The apparatus of any preceding Claim, wherein the airflow-generating device comprises at least one of a squirrel fan, a planar fan, a reciprocating fan, a coin fan and a piezo fan.

**9.** A method of providing cooling to a portable electronic device comprising:
receiving a cooling indication;
adding one of a balance or an imbalance to a cooling apparatus in response to the cooling indication, the cooling apparatus comprising a vibration component and an airflow-generating device;
driving the vibration component to generate vibration, wherein the driven vibration component drives the airflow-generating device to generate airflow within the portable device to cool the portable device;
determining whether the cooling apparatus is an initially balanced or initially imbalanced system; and
determining whether adding the balance or imbalance result in vibration when the vibration component is driven.

**10.** The method of claim 9, wherein driving the vibration component causes reduced vibration.

**11.** The method of any one of Claims 9 to 10 wherein adding one of a balance or imbalance comprises physically connecting a weight to the cooling apparatus.

**12.** The method of any one of Claims 9 to 11 wherein adding one of a balance or imbalance comprises activating or deactivating a rotor in a set of rotors within the vibration component; and/or rotating the vibration component at a selected speed.

**13.** The method of any one of Claims 9 to 12 wherein adding one of a balance or imbalance comprises:
providing a current to an electromagnet located adjacent the vibration component to produce an electromagnetic field.
